(19) Europäisches Patentamt
European Patent Office
Office européen des brevets

(11) EP 2 441 789 A2

(12) **EUROPEAN PATENT APPLICATION**

(43) Date of publication:
**18.04.2012 Bulletin 2012/16**

(51) Int Cl.:
***C08G 73/10*** (2006.01)

(21) Application number: **11182400.9**

(22) Date of filing: **22.09.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2010 US 895416**

(71) Applicant: **General Electric Company**
**Schenectady, NY 12345 (US)**

(72) Inventors:
- **Cao, Yang**
  **Niskayuna, NY New York 12309 (US)**
- **Tan, Daniel Qi**
  **Niskayuna, NY New York 12309 (US)**
- **Shafer, Sheldon Jay**
  **Niskayuna, NY New York 12309 (US)**
- **Fang, Xiaomei**
  **Niskayuna, NY New York 12309 (US)**

(74) Representative: **Szary, Anne Catherine**
**GE International Inc.**
**Global Patent Operation - Europe**
**15 John Adam Street**
**London**
**WC2N 6LU (GB)**

(54) **Electronic devices containing polyetherimide components**

(57) One embodiment of this invention is directed to an electronic article (10), formed in part from a polyetherimide resin having a repeating unit of formula I:

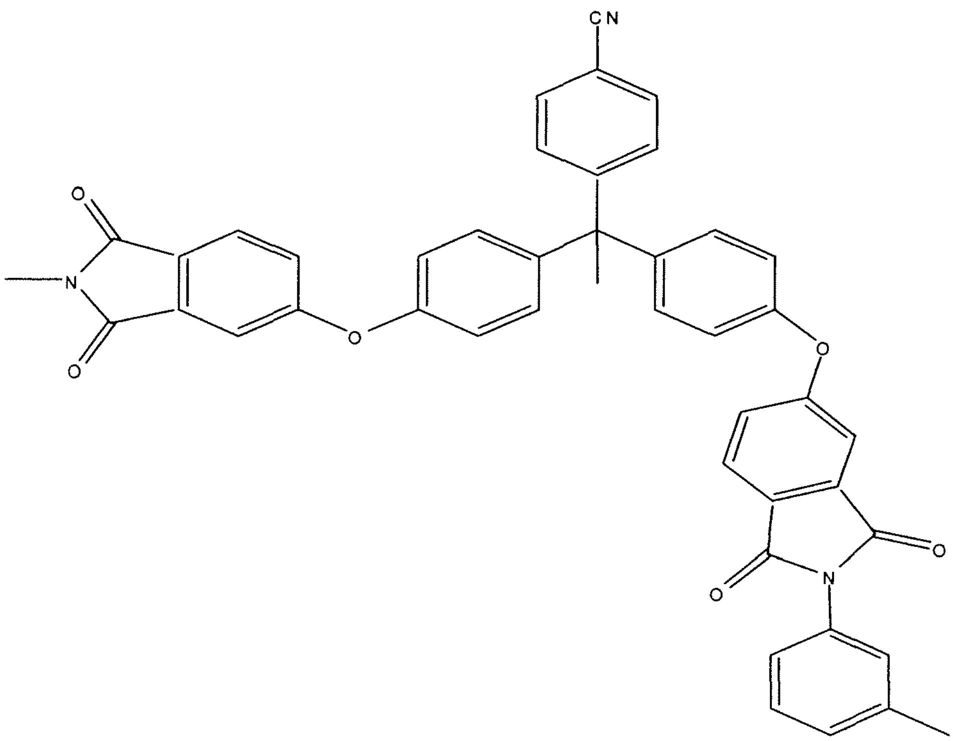

Another embodiment describes a capacitor (10) which includes a dielectric film (12) formed from such a polyether-

EP 2 441 789 A2

imide resin. The capacitor (10) further includes at least one electrode (16) attached to a first surface of the dielectric film (12).

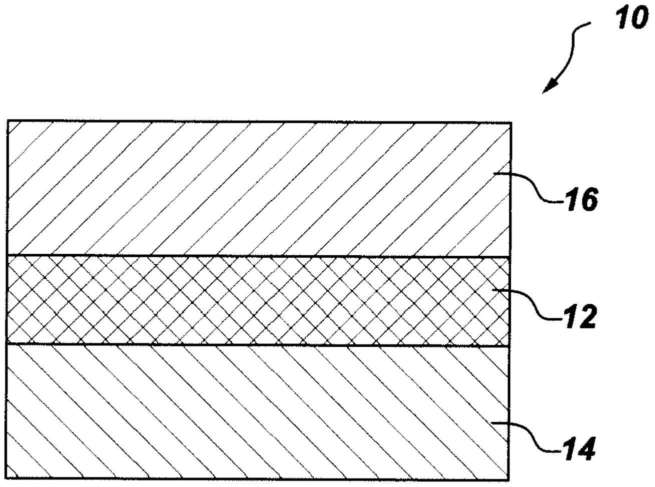


Fig. 1

## Description

### BACKGROUND OF THE INVENTION

In general, the invention relates to electronic articles. In some specific embodiments, the invention is directed to high energy density capacitors.

Capacitors are passive electronic components useful for many different applications, such as energy storage; blocking direct current flow in favor of alternating current; and for "smoothing" the output of power supplies. In particular, high energy density capacitors have become increasingly important in various industrial, military, and commercial operations.

Polymer based capacitors are lightweight and compact and hence, are attractive for various land-based and space applications. However, most of the dielectric polymers are characterized by low energy densities (often less than about 5 J/cc), and have low breakdown strength (less than about 450 kV/mm), which may limit the operating voltage of the capacitor. In order to achieve high energy density, it may be desirable to have both high dielectric constant characteristics, and high breakdown strength. A trade-off between these two properties may not always be advantageous. Moreover, another critical characteristic is increasing in importance, i.e., the need to form the capacitor from materials which can withstand operating temperatures greater than about 200°C.

Since many dielectric polymers that exhibit high breakdown strength have a low dielectric constant, the polymer system often requires some sort of modification. For example, high dielectric-constant ceramic fillers can be used to form a polymer composite with an enhanced dielectric constant. Additional increases in dielectric strength can be achieved by having a high concentration of the ceramic filler, e.g., as high as about 85% by volume.

However, a high concentration of the ceramic filler not only decreases the mechanical flexibility of the composite, but can also introduce interfacial defects. These defects can subsequently lower the breakdown strength of the polymer composites.

A variety of polymer systems have been used for high density capacitors. Each material certainly has advantages, but can also exhibit drawbacks. As an example, polypropylene materials, as well as polycarbonates and certain polyesters, have been used for thin film capacitors. Each of these materials exhibits some properties which are attractive for capacitors. However, they all have a glass transition temperature (Tg) which is 150°C or lower, thereby limiting the working temperature of the material to about 120°C or less.

Cyanoresins have also been used for various types of capacitors. These materials usually exhibit high dielectric constants (e.g., an "ε" value of greater than 15), and are commercially available as film forming resins. However, cyanoresins usually do not have enough mechanical strength to be processed into free-standing films for capacitor fabrication. Usually, the film cracks, due to embrittlement of the material.

Polyimides, such as the polyetherimide materials, have also been considered for capacitor films. Some (though not all) of the polyetherimide materials are known to exhibit advantageous high-temperature characteristics. However, when used as a film capacitor, these materials sometimes do not have the necessary energy density values for higher-level commercial devices.

It should be apparent that advances in capacitor technology would be welcome in the art. In a general sense, advances in high-temperature materials for any electronic devices would be of great interest. In many cases, the materials should have relatively high dielectric constant values and breakdown strength characteristics. The materials should also be capable of operating at temperatures greater than about 140°C, and should be robust enough (e.g., film strength, ductility, and flexibility) to perform adequately within devices exposed to challenging environments. It would also be ideal if the polymeric materials upon which device components are based could be formed by economical techniques which enhance the overall device-manufacture process.

### BRIEF DESCRIPTION OF THE INVENTION

One embodiment of this invention is directed to an electronic article, comprising a polyetherimide resin having a repeating unit of formula **I:**

(I)

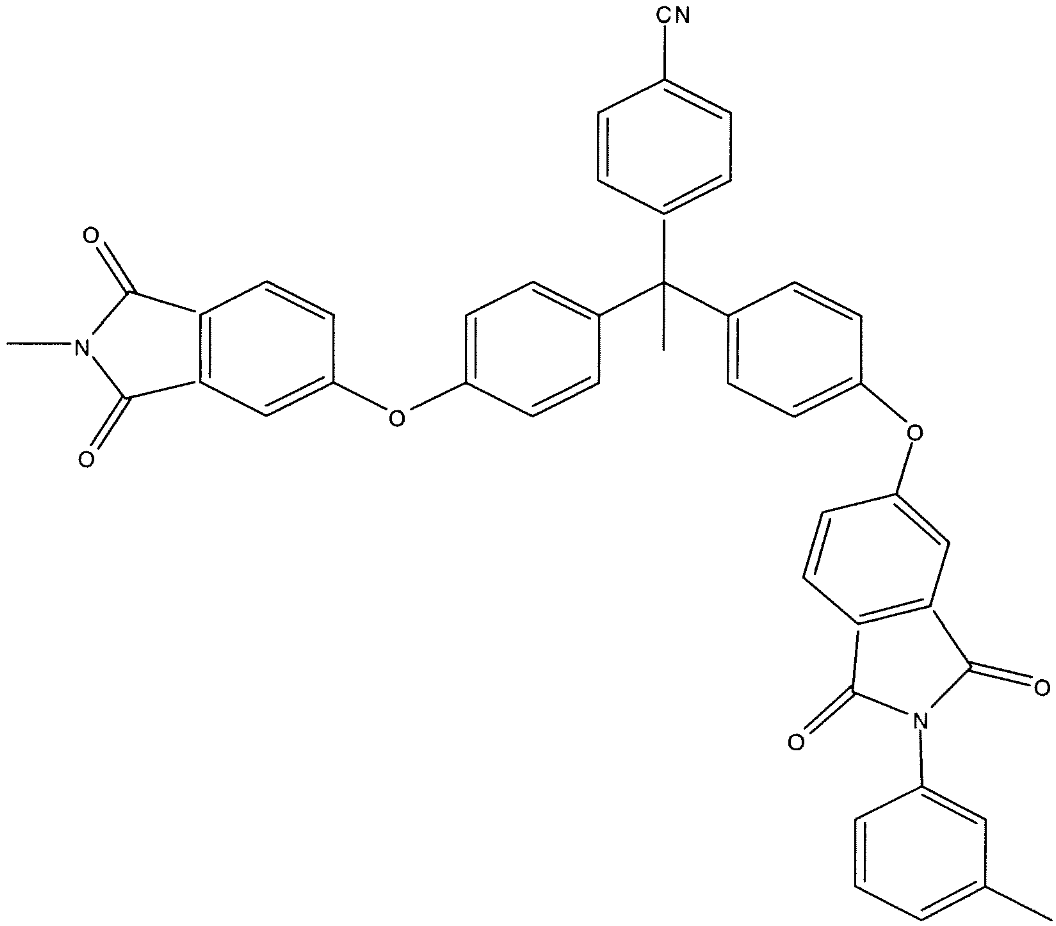

Another embodiment of the invention relates to a capacitor, comprising:

(a) a dielectric film formed of a polyetherimide resin having a repeating unit of formula **I**; and

(b) at least one electrode attached to a first surface of the dielectric film.

BRIEF DESCRIPTION OF THE DRAWINGS

FIG. 1 is an illustration of a capacitor according to one embodiment of the invention.

FIG. 2 is an illustration of a wound capacitor according to embodiments of this invention.

FIG. 3 is an illustration of a capacitor with a metallized film arrangement, according to embodiments of the invention.

FIG. 4 depicts a multilayer capacitor, according to embodiments of the invention.

FIG. 5 is a plot of dielectric response as a function of frequency, for a polyetherimide polymer according to embodiments of this invention.

DETAILED DESCRIPTION OF THE INVENTION

Approximating language, as used herein throughout the specification and claims, may be applied to modify any quantitative representation that could permissibly vary without resulting in a change in the basic function to which it is related. Accordingly, a value modified by a term or terms, such as "about," is not limited to the precise value specified. In some instances, the approximating language may correspond to the precision of an instrument for measuring the value.

In the following specification and claims, the singular forms "a", "an" and "the" include plural referents unless the context clearly dictates otherwise. As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable. For example, in some circumstances, an event or capacity can be expected, while in other circumstances the event or capacity cannot occur - this distinction is captured by the terms "may" and "may be".

Some of the dielectric properties considered herein are the dielectric constant, dissipation factor, the dielectric breakdown voltage or dielectric breakdown strength, and the energy density. The "dielectric constant" of a dielectric material is a ratio of the capacitance of a capacitor, in which the space between and around the electrodes is filled with the dielectric material, to the capacitance of the same configuration of electrodes in a vacuum. As used herein, the term "dissipation factor" or "dielectric loss" refers to the ratio of the power dissipated in a dielectric material, to the power applied. The dissipation factor is usually measured as the tangent of the loss angle (δ), or the cotangent of the phase angle.

As used herein, "dielectric breakdown strength" refers to a measure of the dielectric breakdown resistance of a dielectric material under an applied AC or DC voltage. The applied voltage prior to breakdown is divided by the thickness of the dielectric (e.g., polymer) material, to provide the breakdown strength value or "breakdown voltage". It is generally measured in units of potential difference over units of length, such as kilovolts per millimeter (kV/mm).

The energy of a capacitor is generally calculated by the equation $E=(1/2)\ CV^2$, where C is the capacitance in farads (F), and V is the working voltage of the capacitor in volts (V). These relationships may also be expressed as a function of the electric field, "E". If the dielectric constant K of the material does not change with the applied electric field E (in V/um), the electric energy density $U_E$ (in J/cc) stored in a capacitor can be calculated by

$$U_E = 1/2 \epsilon_0 K E^2,$$

where $\epsilon_0$ is the permittivity of vacuum. The highest electric field that can be applied to a material is called its dielectric breakdown strength. As used herein, the term "high temperatures" refers to temperatures above about 100 degrees Celsius (°C), unless otherwise indicated.

As mentioned previously, electronic articles of the present invention, such as capacitors, include one or more components formed of polyetherimide materials. As a class of materials, polyetherimides are known in the art, and described in many references. Non-limiting examples include U.S. Patents 5,856,421 (Schmidhauser); 4,011,198 (Takekoshi et al); and 3,983,093 (Williams, III, et al), all of which are incorporated herein by reference. Methods for making the polyetherimides are also described in these or other references.

For the present invention, the polyetherimide resin (i.e., polyetherimide polymer) comprises a structure of repeating units of the formula (**I**)

**I**

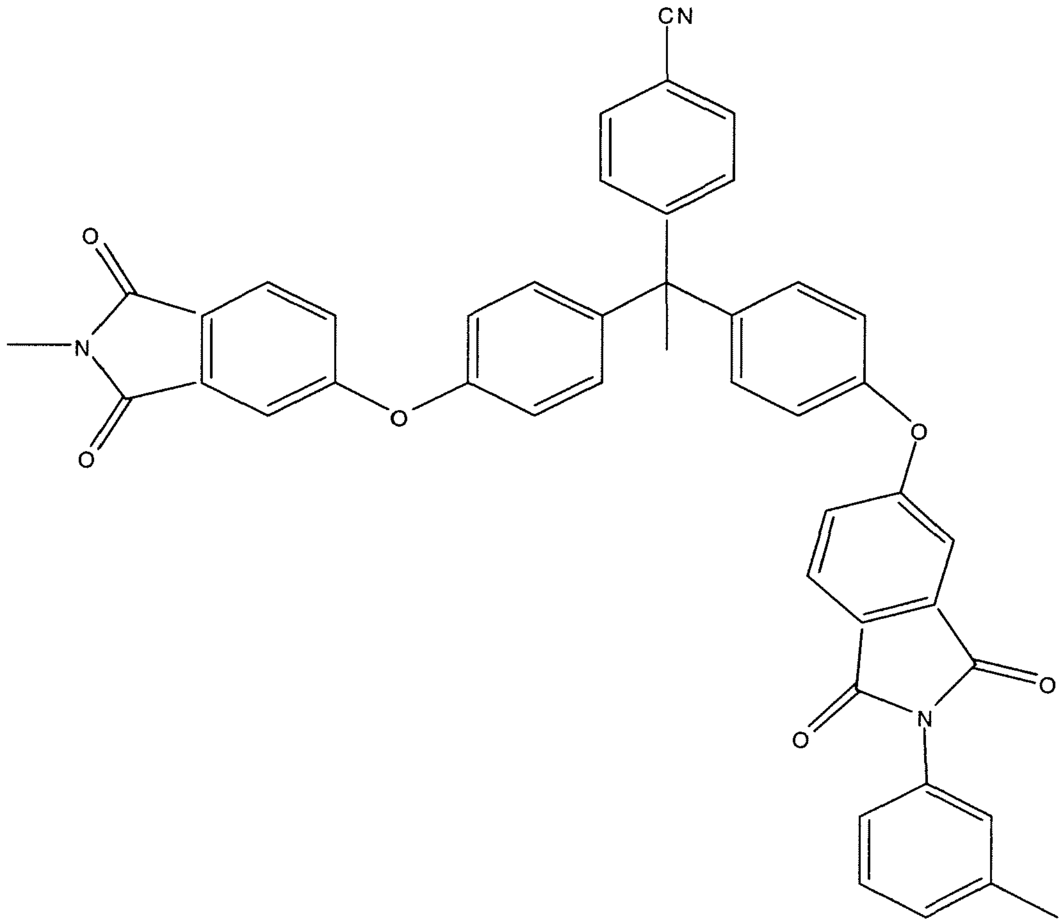

,

wherein each aromatic ring in the structure can be substituted with at least one halogen atom, nitro group, cyano group, alkyl group, cycloalkyl group, or aryl group. These resins are described in Application S.N. 12/924,666 (Docket 241840-2), which is incorporated herein by reference. As described below, the presence of this aryl-cyano polyetherimide structural unit in the resin can provide significant advantages, when incorporated into various electronic articles. The cyano group itself is usually highly polar, and has a substantially high dipole moment. The group also exhibits substantially high mobility, allowing the molecule to re-orient under an electric field. This may, in turn, lead to high dielectric constant values in the resulting polyetherimide polymers.

As also described in co-pending Application S.N.12/924,666 (Docket 241840-2), the cyano (CN)-phenyl-terminating bisphenol structure of the resin (designated for simplicity as substructure "x" in Formula I) can be prepared from a monomer salt which comprises structure (II), as set forth in the co-pending case. In that instance, some or all of the phenyl sites can have various groups or atoms attached, usually replacing hydrogen. Non-limiting examples include halogen, nitro, cyano, alkyl, cycloalkyl, and aryl.

The resin material used for preferred embodiments of this invention can be described as a copolymer, having the formula

$$[\mathbf{A}]_m [\mathbf{B}]_{1-m}.$$

In the formula, A has the structure

**"A"**

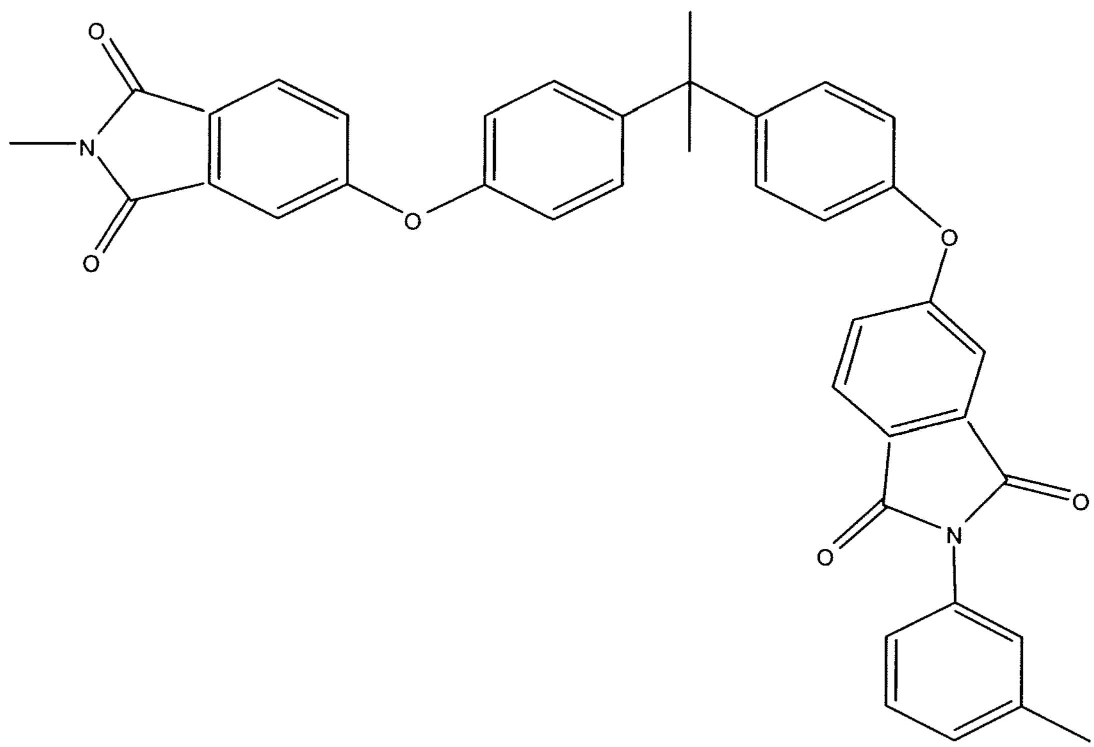

and B has the structure

"B"

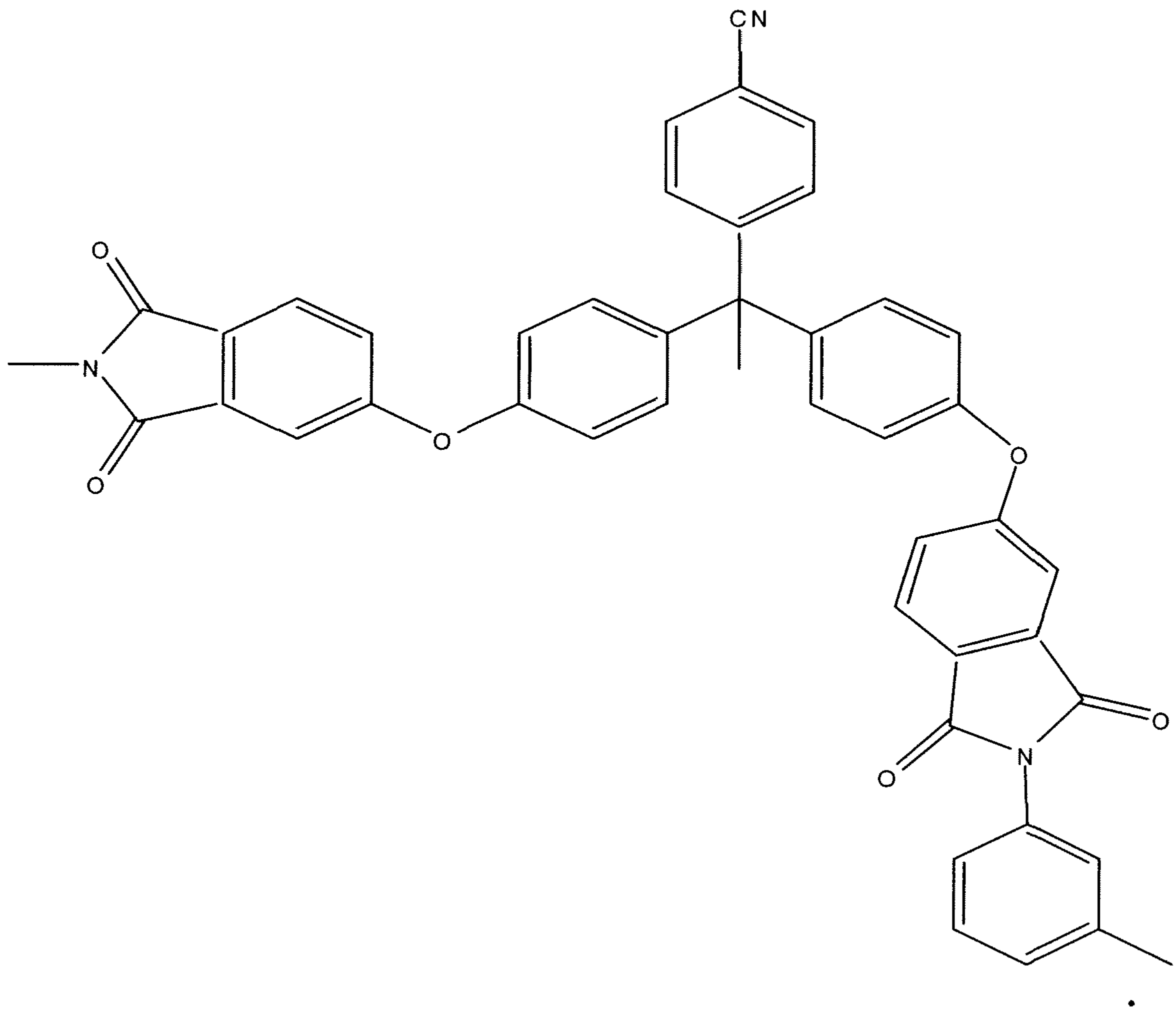

For each of the formulae "A" and "B", some or all of the aromatic rings can be substituted with at least one halogen atom, nitro group, cyano group, alkyl group, cycloalkyl group, or aryl group.

The relative proportions of structure A and structure B (i.e., Bisphenol A-derived material to arylcyano bisphenol-derived material) may vary considerably. Some of the factors which influence the selection of proportions include desired levels of tensile strength, dielectric constant values, dissipation loss values, energy density, specific polyetherimide identity, the type of electronic device in which the resin will be incorporated; and the operational duration and mode (e.g., continuous or discontinuous) of the device. In some instances, an increase in the arylcyano content can increase the Tg values, the energy density, and the dielectric constant; but will also increase the dissipation loss factor. Moreover, the dielectric constant may begin to level off or decrease as the arylcyano content is increased to higher levels, e.g., greater than about 50%, as a percentage of the total bisphenol-derived content.

The proportion of the Bisphenol A-derived material to the arylcyano bisphenol-derived material can be expressed in terms of the final polymer content. Thus, in some embodiments, the polyetherimide resin comprises at least about 10% of structure B above, based on the total polymeric content of structures A and B. In some specific embodiments, the resin comprises no greater than about 50% of structure B, and preferably, no greater than about 40% of structure B. For many capacitor end uses, the polyetherimide resin will comprise about 15% to about 40% of structure B; and in some cases, about 20% to about 30% of structure B.

The molecular weight of the polyetherimide can be adjusted to some degree, and will depend on many of the factors listed above. In some instances, the molecular weight (weight average) is in the range of about 35,000 to about 100,000. In more specific embodiments, the range is about 40,000 to about 70,000, although the most suitable range

will be tailored to a particular end use.

As also alluded to previously, the tensile strength of the polyetherimide resin can also be adjusted, e.g., by adjustment of the monomer proportions. For a polyetherimide film having a thickness of about 1 micron to about 100 microns, the tensile strength (e.g., via ASTM D-638 standards) is often greater than about 5,000 psi, and in some cases, greater than about 15,000 psi.

In some embodiments, the glass transition temperature (Tg) of the polyetherimide resin is greater than about 200°C. For high temperature applications which can be exemplified by some of the high-performance capacitors described herein, the Tg may be greater than about 220°C, and in some cases, greater than about 230°C, or even, greater than about 250°C. As mentioned above, the polyetherimide material described herein is designed to provide the desired balance between mechanical properties such as tensile strength, thermal properties such as the Tg, and the other properties for a particular end use, e.g., the various electrical properties.

The polyetherimide resins of this invention can be prepared by the methods set forth in Application S.N. 12/924,666, for S. Shafer et al (Docket 241840-2). In some embodiments, the resins are formed by the reaction of at least two bisphenol compounds (preferably in salt form), with metaphenylenediamine bis(4-nitrophthalimide), expressed as structure **III** below.

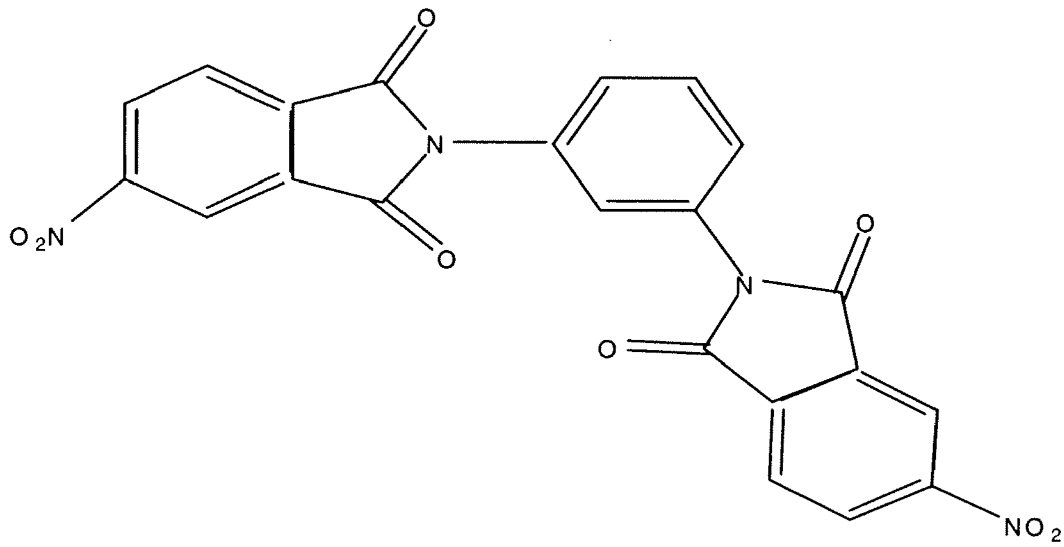

**III**

An illustrative preparation of compound III is described in the Shafer application. (For simplicity, this compound is sometimes referred to as the "nitrophthalimide compound", and in some cases, "Nitro PAMI"). The material can be prepared by the reaction of a nitro-substituted phthalic anhydride with an aromatic diamine.

As mentioned previously, at least one of the bisphenol compounds is Bisphenol A; and at least one of the compounds is an arylcyano bisphenol compound like that of Structure II (which can include various substituents, as described herein). The bisphenol compounds are most often used in salt form, as set out in the referenced patent application of S. Shafer.

The reaction to form the polyetherimide resin is usually carried out in a solvent system which includes at least one polar aprotic solvent and at least one aromatic solvent. In preferred embodiments, the bisphenol compounds are pre-mixed in the solvent system. The metaphenylenediamine bis(4-nitrophthalimide) is then added to the bisphenolic mixture within a moisture-free environment. The final reaction takes place very rapidly; and the polyetherimide polymer product precipitates from the reaction solution. Various other details are provided in the referenced patent application of S. Shafer; and in one of the examples herein.

In some embodiments, polyetherimide resins employed in the present invention have a dielectric constant greater than about 3, at 20°C and 1 kHz. In certain embodiments, the resins have a dielectric constant greater than about 5, at 20°C and 1 kHz. Moreover, the dissipation factor of the resins described herein is less than about 0.01, in some embodiments.

As mentioned above, the polyetherimide resins are often used as films within electronic devices, and these films are sometimes referred to herein as "dielectric films". In certain embodiments, the polyetherimide dielectric film has a thickness in a range from about 0.05 micron to about 20 microns. In some specific instances, the dielectric film

has a thickness in a range from about 0.1 micron to about 10 microns, although for some end use applications, the thickness could be as high as about 50 microns. The dielectric breakdown strength of the film is inversely proportional to the film thickness. Accordingly, the selected thickness of the dielectric film is, in part, dependent on the required energy density, and the processing feasibility.

The dielectric breakdown strength of the film may be, in part, controlled by the film composition, film thickness, and the quality of the film, which is usually defined by surface defects, film deposition, and surface chemical modification. Thinner dielectric films usually exhibit higher breakdown strength values, and the breakdown strength of the dielectric film can be improved by reducing the thickness of the film. Typically, for general embodiments of the invention, a dielectric polyetherimide film having a thickness in the range of about 1 micron to about 100 microns has a breakdown strength of at least about 200 kV/mm (direct current), and in some instances, at least about 500 kV/mm. In some embodiments, the dielectric film has a breakdown strength in a range from about 200 kV/mm to about 800 kV/mm. In some preferred embodiments, the dielectric film has a breakdown strength in a range from about 300 kV/mm to about 800 kV/mm.

In some embodiments of the present invention, the electronic article is a capacitor, as described, for example, in U.S. Patent Publication No. 2008/0123250 (Qi Tan et al), which is incorporated herein by reference. Most often, the capacitor includes a dielectric film and at least one electrode attached to the dielectric film. FIG. 1 provides a simplified illustration of a capacitor 10, having a dielectric film 12 deposited on a substrate 14. The dielectric film 12 includes one of the polyetherimide resins described herein. An electrode 16 is attached to the dielectric film 12. (The layers are depicted for ease-of viewing, without any indication of relative thicknesses). Usually, the electrode 16 includes a layer of a conducting polymer or a metal. Commonly used metals include aluminum, stainless steel, titanium, zinc and copper. The electrode layer is typically thin, on the order of about 50 Angstroms to about 500 Angstroms. In some embodiments, the capacitor may be a multilayer capacitor. In those situations, a number of dielectric films and electrode layers can be alternately arranged to form the multilayer structure. Various types of capacitors are described in U.S. Patent 7,542,265 (Tan et al), which is incorporated herein by reference. It should also be emphasized that the present invention is not limited to any particular type of capacitor, as long as the general features and materials described herein are present.

The use of the polyetherimide films described herein, providing high dielectric constant and breakdown strength values, can facilitate the design of capacitors with relatively high energy density values. In one embodiment, the energy density of the capacitor is at least about 2 J/cubic centimeter (cc). In another embodiment, the energy density of the capacitor is at least about 5 J/cc. In yet another embodiment, the energy density of the capacitor is at least about 10 J/cc.

The capacitor may optionally include a capping layer disposed on the dielectric film. Examples of suitable capping layer materials include, but are not limited to, polycarbonate, cellulose acetate, polyetherimide, fluoropolymers, parylene, acrylate, silicon oxide, silicon nitride, and polyvinylidene fluoride. For some particular embodiments, the capping layer has a thickness of less than about 10% of the thickness of the dielectric film. The capping layer may help in filling in or otherwise mitigating surface defects and hence, may improve the breakdown strength of the film.

A polyetherimide polymer matrix according to embodiments of this invention may contain various additives and agents to enhance properties for a particular device application. Non-limiting examples include toughening agents, inhibitors (e.g., oxidation inhibitors); and various other types of surfactants. One example of a useful surfactant is a fluorosurfactant (usually non-ionic), which can provide wetting and surface tension reduction properties, as well as enhancing chemical and thermal stability. Commercial examples include the Masurf® brand of surfactants.

As described in the Tan patent (U.S. 7,542,265), wound capacitors are sometimes preferred. FIG. 2 is exemplary; depicting wound capacitor 20. In such embodiments, the dielectric polymer film 22 and the electrode layer 24 are wound to form the capacitor. For certain embodiments, a film and foil arrangement 23 is used, as indicated in FIG. 3. For other embodiments, a metallized film arrangement 25 is employed, as also indicated in FIG. 3. When the dielectric film is substantially thin, it is usually deposited onto a carrier substrate 26, such as a film, a thin metal foil, or a silicon wafer for support, as shown in FIG. 3. Additionally, the capacitor may include one or more capping layers 28, as described above. (Typically, the electrode layer 24 may comprise a conducting polymer or a metal, as alluded to previously). The electrode layer is typically thin, as mentioned above.

In embodiments related to the multilayer capacitor, FIG. 4 is illustrative, where capacitor 30 includes a number of dielectric polymer layers 32. Those layers and electrode layers 34 can be alternately arranged to form the multilayer structure. In these embodiments, the structure is often disposed on a substrate 36.

General techniques for preparing and using the polyetherimide polymers for use with an electronic device are known to those skilled in the art. Usually, the polymer is first dissolved in a suitable solvent, to prepare a solution. A number of solvents can be used; depending on various factors, e.g., their boiling point; and the manner in which the polymer is going to be incorporated into a device. Non-limiting examples of the solvents are as follows: methylene chloride, chloroform, ortho-dichlorobenzene (ODCB); N,N-dimethylformamide (DMF); N-methyl-2-pyrrolidone (NMP); veratrole (1,2-dimethoxybenzene); nitromethane, and various combinations of these solvents.

As described in U.S. Patent 7,542,265, the solution containing the polymer can be coated onto a substrate, to form a dielectric polymer film. Examples of suitable coating processes include, but are not limited to, tape-casting, dip coating, spin coating, chemical vapor deposition, melt extrusion, and physical vapor deposition, such as sputtering. In

one preferred embodiment, the film may be applied by a tape-casting process. When the film thickness is substantially small, solution based coating techniques such as spin coating or dip coating may be used. In an exemplary embodiment, the film may be preferably applied by a spin coating process. As described in the patent of Tan et al, additional steps in forming a capacitor may include packaging, and providing electrical terminals, according to known procedures.

The high energy density of the capacitors described herein may be attractive for numerous land-based and space applications. Especially attractive are pulsed power applications such as electric armor, electric guns, particle beam accelerators, high power microwave sources, and ballistic missile applications. Telecommunication devices can also benefit from the high performance capacitors; examples include cell phones and pagers. Moreover, in view of some of the other attributes, such as small volume, light weight, and high reliability, these capacitors may be suitable for hybrid electric vehiclesincluding electric power steering, pre-heating of catalytic converters, electrically activated air conditioners, and the like.

While capacitors are specifically illustrated, the present invention can be utilized in the form of a number of other devices and other types of articles. In many instances, the enhanced properties of the modified polyetherimides are exhibited in the form of the thin films described herein, although other shapes and sizes (e.g., in terms of thickness) of the resin are possible. The present invention can be embodied in sensors, batteries, flexible printed circuit boards, keyboard membranes, motor/transformer insulations, cable wrappings, industrial tapes, or interior coverage materials.

EXAMPLES

The following examples are presented to further illustrate certain embodiments of the present invention. These examples should not be read to limit the invention in any way.

Example 1

Four samples were evaluated for various electrical and mechanical properties.

Sample 1 was a commercial polyetherimide resin, Ultem®1000, available from SABIC Innovative Plastics.

Sample 2 was a methyl-cyano-modified polyetherimide resin, prepared by reacting metaphenylenediamine bis (4-nitrophthalimide) with a salt of the methylcyano bisphenol compound set forth below (IV), according to the procedure described farther below for sample 4. The resulting polymer had a molecular weight of 46,000.

(Methylcyano bisphenol compound) - IV

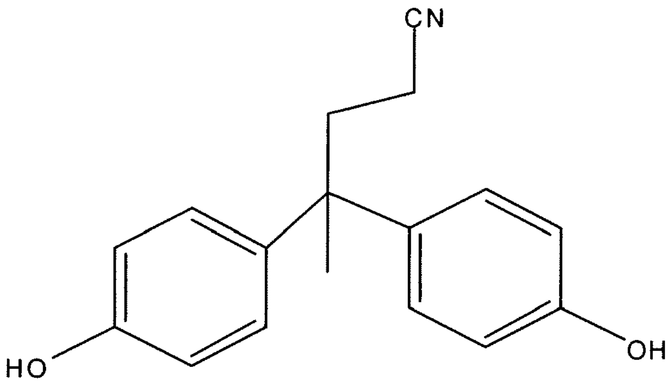

Sample 3 was a modified polyetherimide resin, containing cyano groups. This sample was similar to a material prepared in Example 2 of U.S. Patent 5,357,033 (Bendler e al), which is incorporated herein by reference. (The material in the Bendler patent is sometimes referred to as a polyetherimide containing "cyanomethyl dipolar groups"). The sample was prepared by reacting metaphenylenediamine bis(4-nitrophthalimide) with a salt of the cyano bisphenol compound illustrated below (V). The resulting polymer had a molecular weight of 42,000.

(Cyano bisphenol compound) - V

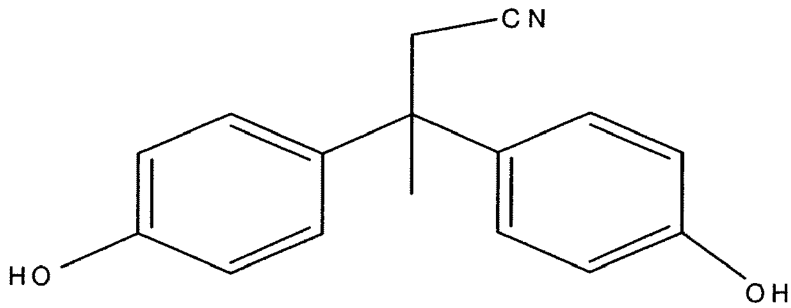

Sample 4 was a modified polyetherimide resin, according to embodiments of the present invention. The sample was prepared as described in co-pending Application S.N. 12/924,666 (Docket 241840-2). To a 2 liter 3-neck round bottom flask equipped with a mechanical stirrer in a dry box was weighed 81.702 grams (0.3009 moles of the disodium salt of Bisphenol-A and 35.989 grams (0.10015 moles) of the disodium salt of the arylcyano bisphenol, as indicated below (VI):

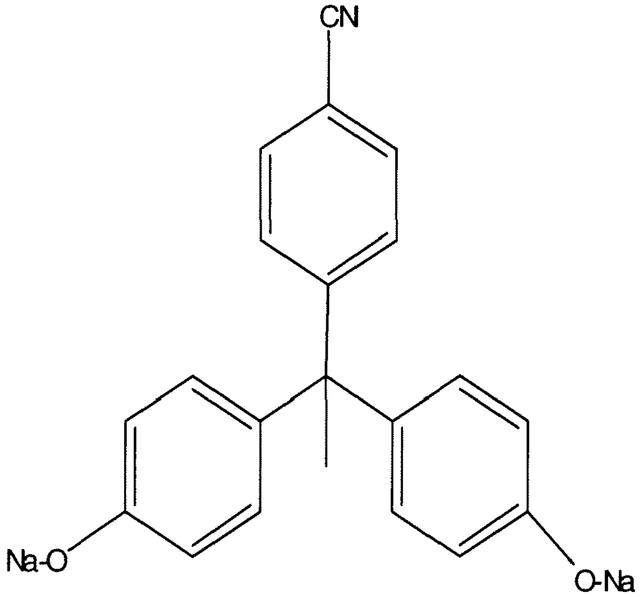

**VI**

The salts were washed into the vessel with dry dimethyl sulfoxide (DMSO) (Aldrich Sure-seal). A total of 460 ml of DMSO was added. To the vessel was then added 50 ml of dry toluene (dried over 4 angstrom molecular sieves). The reaction vessel was capped and removed from the dry box. The reaction vessel was then placed in an oil bath with the temperature set at 126°C. The reaction vessel was equipped with a nitrogen inlet and a condenser/receiver equipped with a backpressure bubbler. The stirred mixture quickly became a clear solution, and over the course of about four hours, the toluene was distilled out of the vessel.

The temperature for the oil bath was then lowered to 79°C, and the bath was dropped away from the reaction flask, allowing the mixture to cool. The flask was then capped and moved back into the dry box. The vessel was allowed to cool for about 1.5 hours, and all of the salt was still soluble. Bis(4-nitrophthalimide) was then weighed out (183.443 grams, 0.40023 moles). The solid material was carefully transferred to the reaction vessel, and 270 ml of additional dry DMSO was used to rinse the bis(4-nitrophthalimide) into the vessel. The reaction vessel was capped and removed from the dry box. The reaction vessel was then re-immersed in the oil bath, which was now maintained at 79°C. The nitrogen inlet was re-installed, along with the condenser/receiver. The agitator was turned on slowly, with the speed increasing slowly, as the reaction proceeded.

The reaction took place rapidly over the course of 16-18 minutes, with the reaction being terminated when the polymer precipitated as a large, solid chunk. The DMSO solution, which contained some low molecular weight polymer, and most of the by-product sodium nitrite, was poured out of the vessel. The resulting polymer chunk was then dissolved in chloroform, and quenched with 6.0 ml of acetic acid. The solution was then filtered through a 1.5 micron glass fiber

filter, in order to remove traces of occluded sodium nitrite. The polymer was then precipitated into a methanol solution, using a high-speed blender. Its GPC Molecular weight specifications were as follows: Mw - 64,889, Mn - 22,834. Tg - 235 C. Yield - 225 grams.

Table 1

| Polymer Sample | Type[a] | Tg (°C)[b] | $\epsilon_r$[c] | Df[d] | Film Strength[e] |
|---|---|---|---|---|---|
| 1 | Commercial Polyetherimide | 217 | 3.2 | 0.001 | Strong/Flexible |
| 2 | Methyl-Cyano Polyetherimide | 226 | 3.5 | 0.019 | Strong/Flexible |
| 3 | Cyano-Poly-ethermide | 228 | 4.7 | 0.019 | Strong/Flexible |
| 4 | Aryl-Cyano-Polyetherimide | 236 | 4.7 | 0.005 | Strong/Flexible |

(a) Samples 1, 2, 3 are comparative samples; Sample 4 is within the scope of the invention
(b) Glass Transition Temperature (ASTM D3418)
(c) Dielectric Constant (Relative Permittivity), as measured by ASTM D 150-98.
(d) Dissipation Loss (Dissipation Factor), as measured by ASTM D150-98.
(e) Measured by close visual inspection of the film, after winding it on a 1/8 inch (3.18 mm) core.

As shown in Table 1, all of the samples exhibited an acceptable level of strength and flexibility, with no visual signs of cracking or other degradation. However, Sample 4, based on the material described previously, exhibited a significantly higher Tg value, allowing the material to be used in electronic devices which are used (and/or constructed) at higher temperatures than other devices. Moreover, the lower dissipation loss factor Df for Sample 4 can lead to a higher density value, which is very important for various devices, such as the capacitors described herein.

FIG. 5 is a plot of dielectric constant values (the more significant feature of the complex dielectric permittivity in some instances), as a function of frequency and temperature, for a polyetherimide resin according to this invention. The figure demonstrates that over a wide range of frequency and temperature, a polyetherimide with the arylcyano modification maintains a dielectric constant of greater than 4.7. Moreover, the dielectric response of the polyetherimide exhibits very little frequency dispersion. In other words, the dielectric response remains relatively constant over a wide frequency range. This type of stability can be very advantageous for many electrical and electronic applications.

Example 2

Samples 5-8 were prepared in the manner described above for sample 4, except that the proportion of the Bisphenol-A and the arylcyano bisphenol (i.e., their respective salts) was varied. After films of the samples (average thickness of about 5-25 microns) were prepared, the properties set out in Table 2 were measured. (Any differences in measured values from those in Example 1 may be due to minor differences in the sample compositions being used; and/or in testing procedures).

Table 2

| Polymer Sample | Aryl-Cyano Level[a] | $\epsilon_r$[b] | Df[c] | Breakdown Strength[d] | Tg (°C)[e] |
|---|---|---|---|---|---|
| 5 | 15 mole % | 4.0 | 0.010 | 394 | >220 |
| 6 | 25 mole % | 4.7 | 0.003 | 745** | >220 |
| 7 | 35 mole % | 3.7 | 0.012 | >280 | >220 |
| 8 | 50 mole % | 4.2 | N/A* | >376 | >220 |

(a) Percentage of the aryl-cyano-modified, bisphenol -based monomer; based on the total of that monomer and the Bisphenol A monomer
(b) Permittivity, as measured by ASTM D150-98.
(c) Dissipation Loss (Dissipation Factor), as measured by ASTM D150-98.
(d) Breakdown Strength, as measured by ASTM D149-09, in kV/mm
(e) Glass transition temperature
*Not Available
**(Filtered)

The data for samples 5-8 demonstrate some variation in permittivity, dissipation loss, and breakdown strength, when the ratio of the two bisphenol monomers is changed. However, the benefits of using some level of the aryl-cyano monomer is apparent in all instances. In some embodiments, the use of about 25 mole % of the aryl-cyano monomer, or a range surrounding 25 mole %, is preferred.

The present invention has been described in terms of some specific embodiments. They are intended for illustration only, and should not be construed as being limiting in any way. Thus, it should be understood that modifications can be made thereto, which are within the scope of the invention and the appended claims. Furthermore, all of the patents, patent applications, articles, and texts which are mentioned above are incorporated herein by reference.

## Claims

1. An electronic article, comprising a polyetherimide resin having a repeating unit of formula **I**:

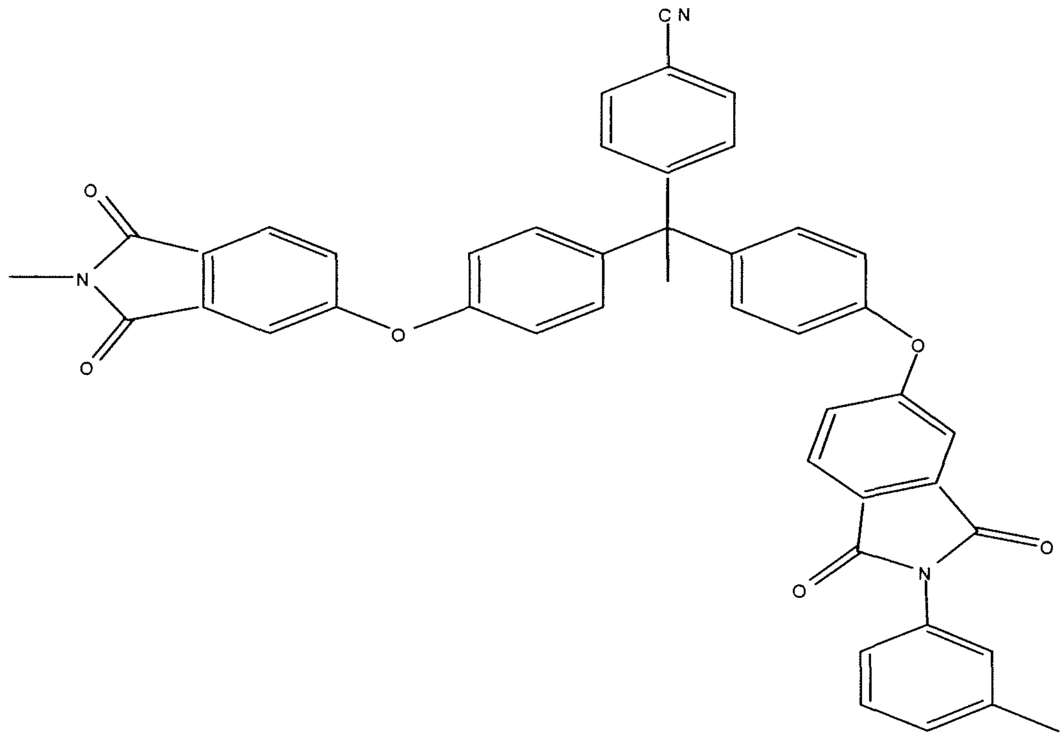

**(I)**

2. The electronic article of claim 1, wherein the polyetherimide resin is in the form of at least one thin film.

3. The electronic article of claim 2, wherein the thin film has a thickness in the range of about 0.05 micron to about 50 microns.

4. The electronic article of any preceding claim, comprising a capacitor, sensor, battery, flexible printed circuit board, keyboard membrane, motor/transformer insulation, cable wrapping, industrial tape, or interior coverage material.

5. The electronic article of any preceding claim, wherein the polyetherimide resin has the formula:

$$[A]_m [B]_{1-m},$$

wherein "A" has the structure

**A**

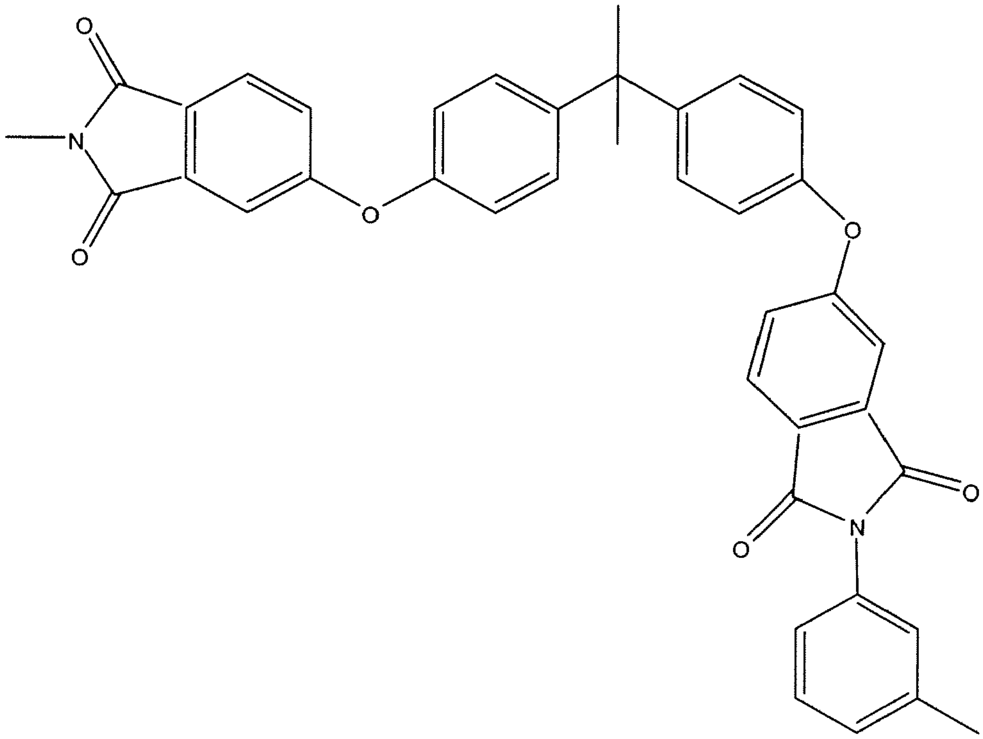

,

and "B" has the structure

**B**

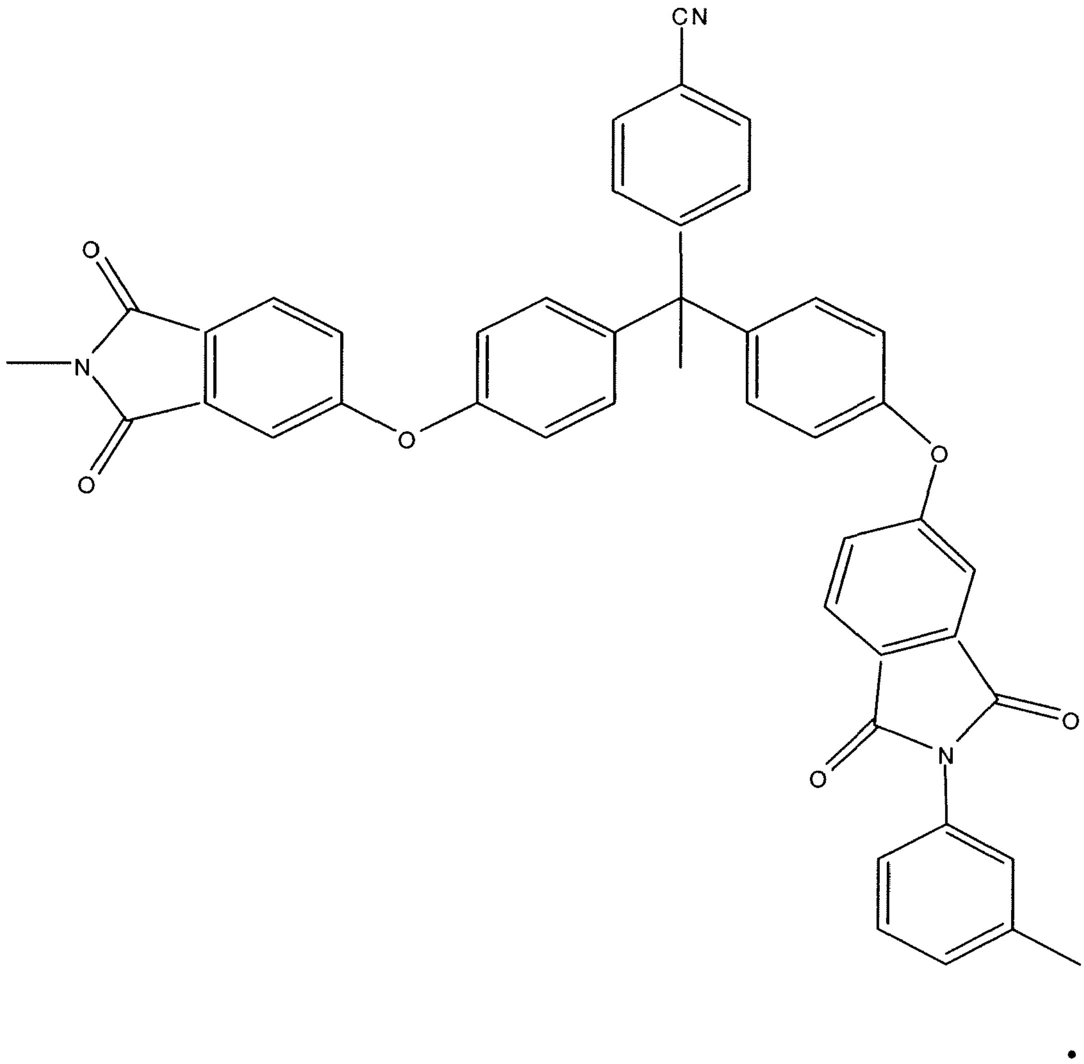

6. A capacitor, comprising:

(a) a dielectric film formed of a polyetherimide resin having a repeating unit of formula I;

I

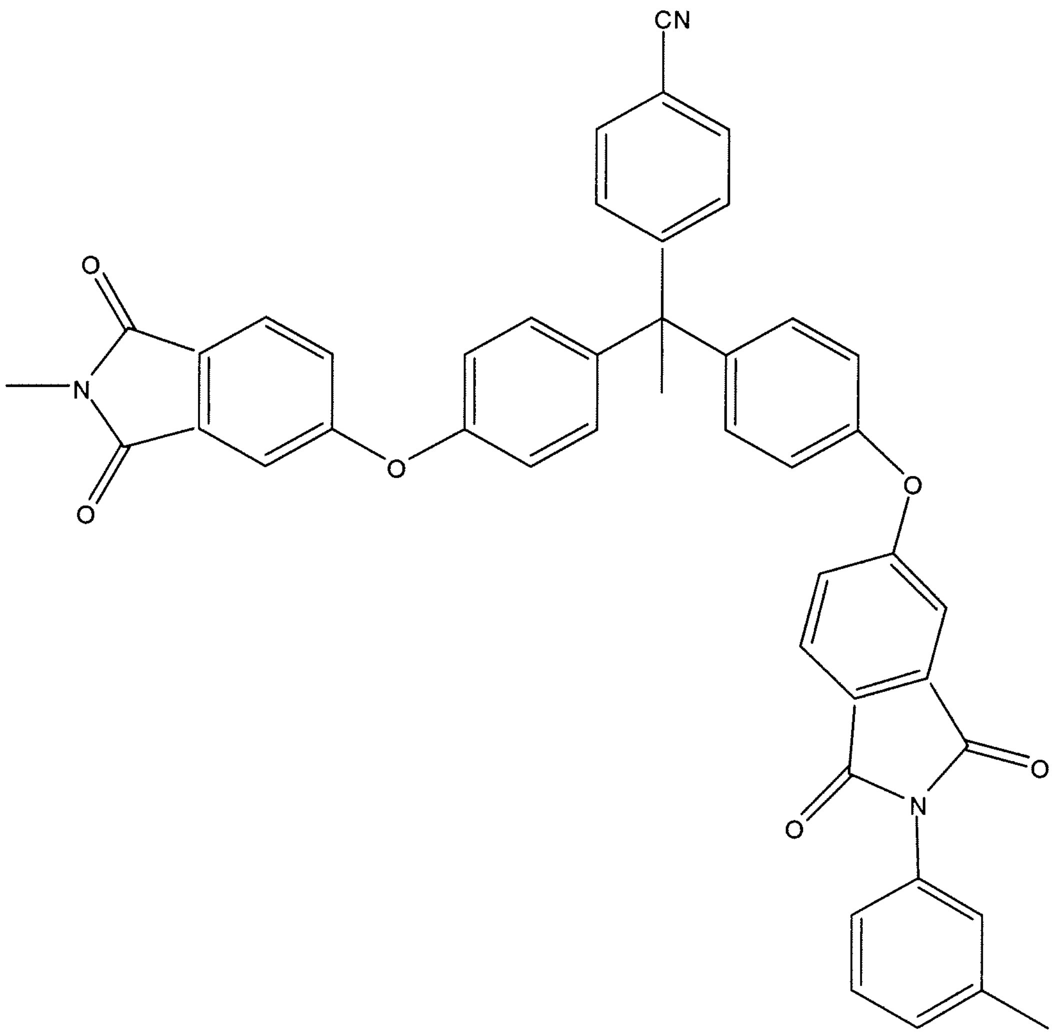

and

(b) at least one electrode attached to a first surface of the dielectric film.

7. The capacitor of claim 6, wherein the polyetherimide resin has the formula:

$$[A]_m [B]_{1-m},$$

wherein "A" has the structure

A

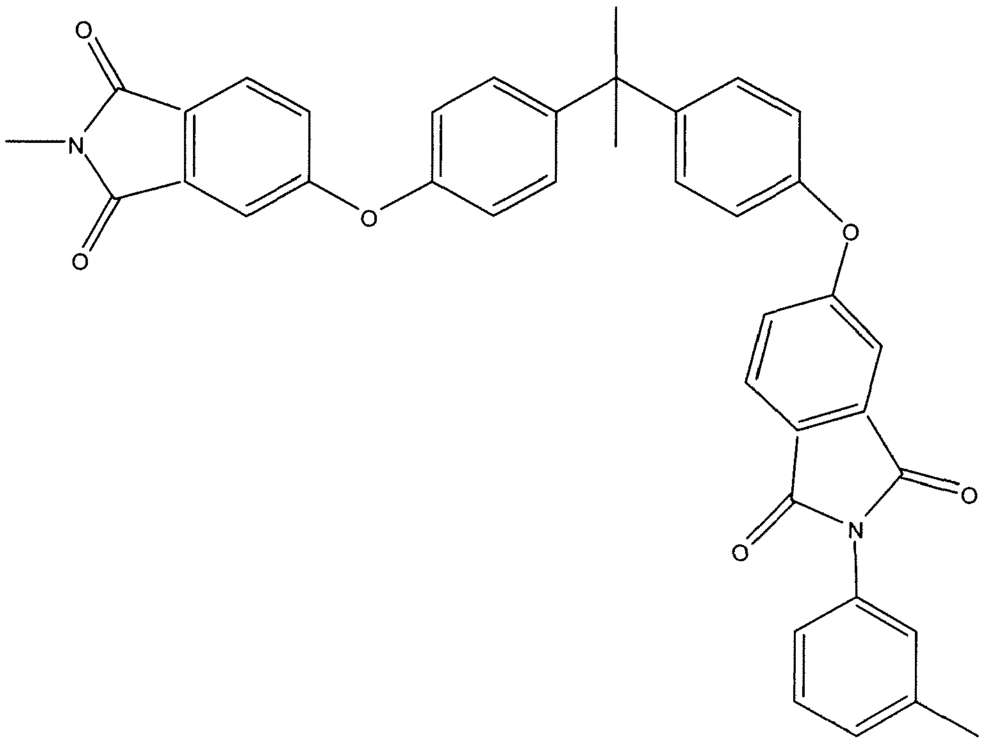

,

and "B" has the structure

**B**

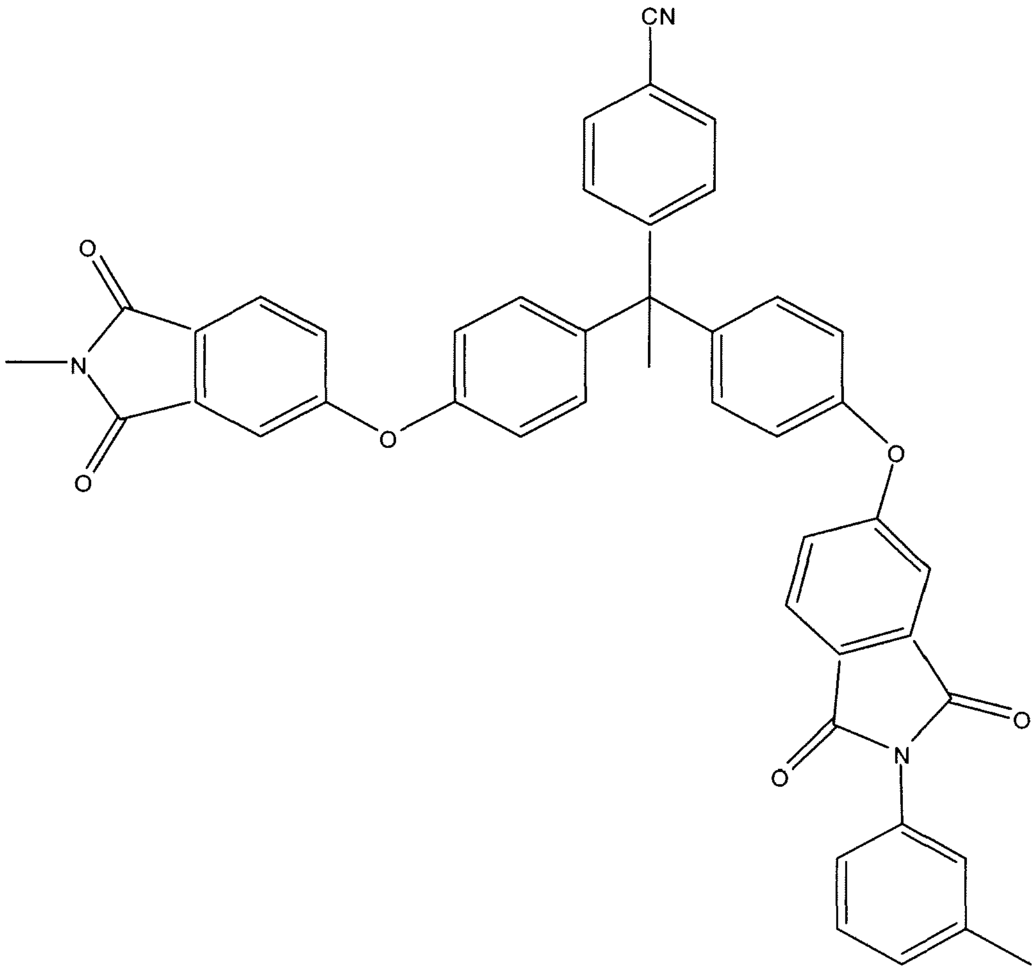

•

8. The capacitor of claim 6 or claim 7, wherein a metallized layer is disposed on a second surface of the dielectric film.

9. The capacitor of any one of claims 6 to 8, wherein the polyetherimide resin forming the dielectric film has a glass transition temperature (Tg) of greater than about 220°C.

10. The capacitor of any one of claims 6 to 9, wherein the polyetherimide resin has a breakdown strength of at least about 500 kV/mm, and a dielectric constant of greater than about 3.

11. The capacitor of any one of claims 6 to 10, having an energy density of at least about 2 J/cubic centimeter.

12. The capacitor of any one of claims 6 to 11, wherein the dielectric film and the electrode are wound, so as to form a wound capacitor.

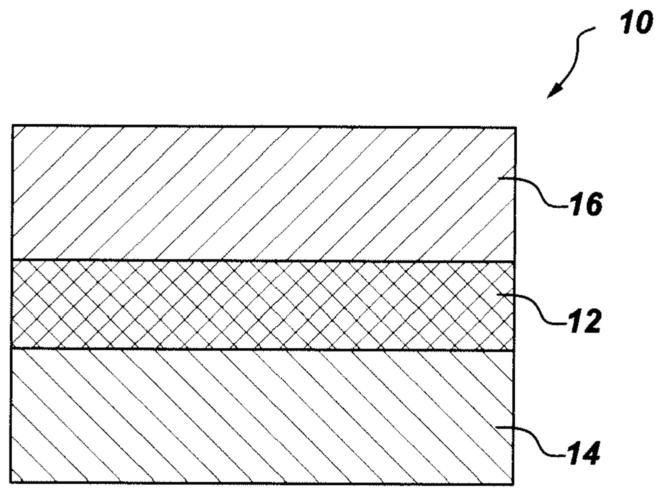


Fig. 1

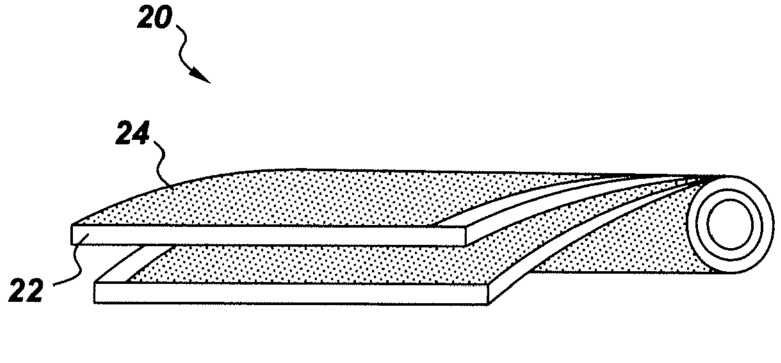


Fig. 2

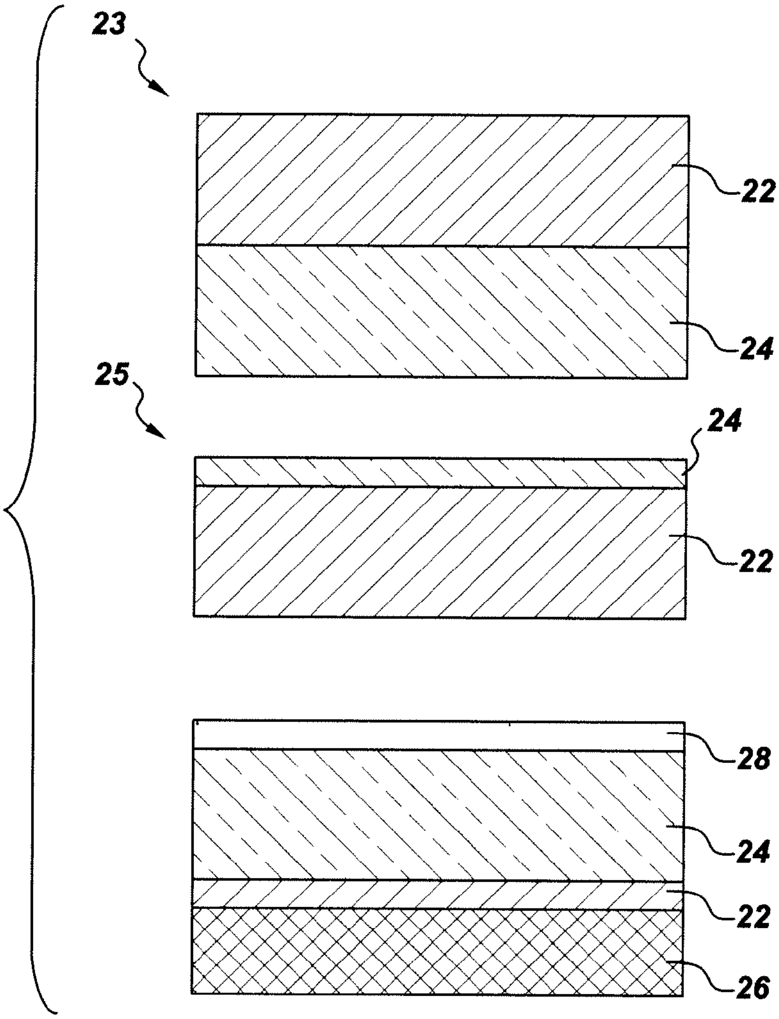


Fig. 3

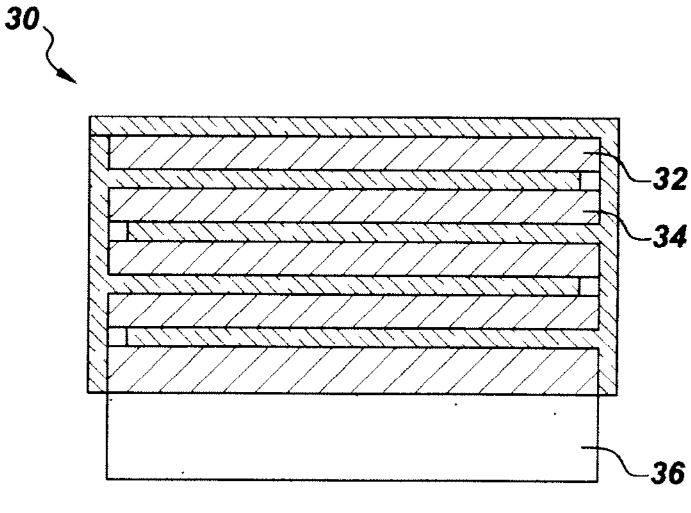


Fig. 4

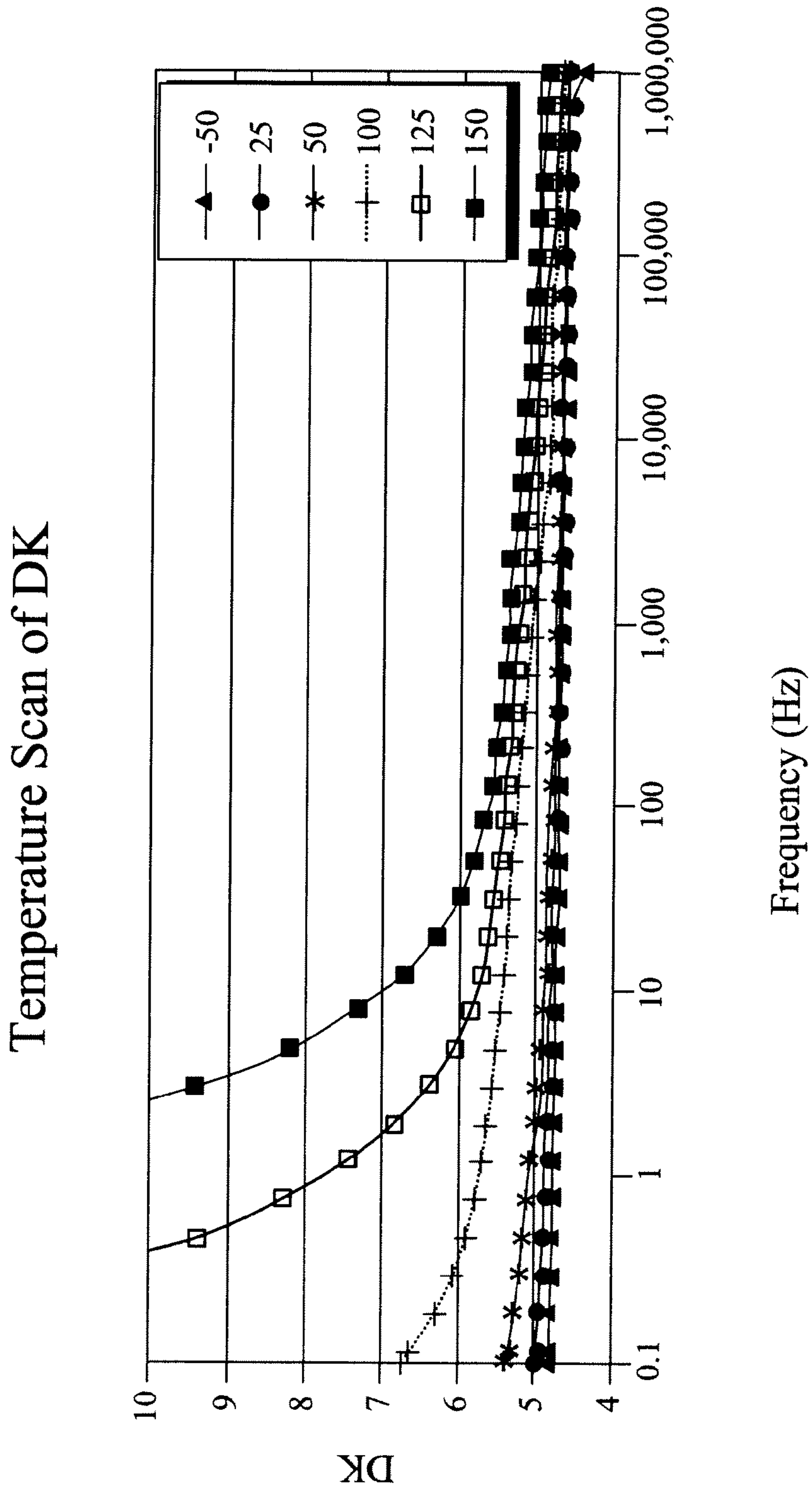
Temperature Scan of DK
DK
10
9
8
7
6
5
4
0.1
1
10
100
1,000
10,000
100,000
1,000,000
Frequency (Hz)
-50
25
50
100
125
150

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5856421 A, Schmidhauser
- US 4011198 A, Takekoshi
- US 3983093 A, Williams, III
- US SN12924666 A
- US 12924666 B
- US 20080123250 A, Qi Tan
- US 7542265 B, Tan
- US 5357033 A, Bendler